Europäisches Patentamt

European Patent Office

Office européen des brevets

(11) Publication number: **0 463 163 A1**

## EUROPEAN PATENT APPLICATION
## published in accordance with Art. 158(3) EPC

(21) Application number: 90904666.6

(22) Date of filing: **14.03.90**

(86) International application number:
**PCT/JP90/00332**

(87) International publication number:
**WO 90/10902 (20.09.90 90/22)**

(51) Int. Cl.5: **G06F 3/033**, G06K 11/20

(30) Priority: **14.03.89 JP 59764/89**
**14.03.89 JP 59765/89**

(43) Date of publication of application:
**02.01.92 Bulletin 92/01**

(84) Designated Contracting States:
**DE FR GB IT**

(71) Applicant: **WACOM CO., LTD.**
**23-4, Sakurada 5-chome Washinomiya-cho**
**Kitakatsushika-gun Saitama-ken, 340-02(JP)**

(72) Inventor: **MURAKAMI, Azuma, c/o Wacom Co.,**
Ltd.
**23-4, Sakurada 5-chome, Washinomiya-cho**
**Kitakatsushika-gun, Saitama 340-02(JP)**
Inventor: **CHIKAMI, Toshihide, c/o Wacom Co.,**
Ltd.
**23-4, Sakurada 5-chome, Washinomiya-cho**
**Kitakatsushika-gun, Saitama 340-02(JP)**

(74) Representative: **TER MEER - MÜLLER -**
**STEINMEISTER & PARTNER**
**Mauerkircherstrasse 45**
**W-8000 München 80(DE)**

(54) **COORDINATE INPUT DEVICE.**

(57) A coordinate input device consisting of a combination of a tablet that uses electromagnetic waves of a first frequency as coordinate detection signals and an illumination unit driven by the signals of a second frequency, wherein the frequencies are so adjusted as to prevent the malfunction of the coordinate input device due to noises from electric circuits such as an inverter circuit for driving the illumination unit.

FIG. 1

Technical Field

The present invention relates to a coordinate input apparatus, and more particularly to a coordinate input apparatus which can prevent a malfunction due to noise caused from an inverter circuit for lighting up an illuminator such as a backlight.

Background Art

Hitherto, there is proposed a coordinate input apparatus comprising an input display unit comprised of a sensing unit, a display arranged in superposed relation to the sensing unit, and a backlight arranged below the sensing unit for illuminating a display screen of the display; an inverter circuit for lighting up the backlight; a position detector circuit for detecting a position indicated by a position indicator (hereinafter referred to as an input pen) through the sensing unit; a first clock signal generator circuit for generating a clock signal to operate the position detector circuit; and a second clock signal generator circuit for generating a clock signal to operate the inverter circuit. This type coordinate input apparatus is disclosed in, for example, U.S. Patent Application Ser. No. 283,713.

The input pen comprises a coil, a capacitor, etc. and includes a tuner circuit which can change the tuning frequency with a predetermined frequency f01 set as the central tuning frequency.

The sensing unit is constituted by arranging a number of loop coils on a transparent substrate at predetermined positions.

The backlight comprises a cold cathode ray tube or the like, and is connected to the inverter circuit operated by a clock signal CK02 of predetermined frequency f02 so that the backlight is illuminated upon application of high voltage, e.g., AC voltage at 300 V.

The position detector circuit and the sensing unit jointly constitute a tablet. The position detector circuit comprises signal generator means for outputting an AC signal of the frequency to each loop coil of the sensing unit, signal detector means for detecting an AC signal of the frequency within a given frequency band with the frequency f01, which is induced in the loop coil of the sensing unit, set as the central frequency, and coordinate detector means for determining coordinate values of a position indicated by the input pen in accordance with the AC signal detected by the signal detector means. The position detector circuit is operated by a reference clock signal CK01 of the frequency f01.

The first clock signal generator circuit generates the clock signal CK01 and the second clock signal generator circuit generates the clock signal CK02. The first and second clock signal generator circuits are not electrically connected to each other.

The position detector circuit thus arranged is to detect a position indicated by the input pen on the input display unit using an electromagnetic wave. More specifically, the position detector circuit is operated by the reference clock signal CK01 of the predetermined frequency f01, and transmits an electromagnetic wave of the frequency f01 to the input pen from the loop coils provided in the sensing unit during a transmission period. A coil in the tuner circuit of the input pen is excited by the electromagnetic waves transmitted from the loop coils of the sensing unit, so that the tuner circuit produces induction voltage in synchronism with the electromagnetic waves.

Following that, the position detector circuit enters a reception period. In this period, the electromagnetic waves transmitted from the loop coils of the sensing unit disappear at once. On the other hand, the induction voltage produced in the tuner circuit of the input pen gradually attenuates depending on the loss within the tuner circuit. In this attenuation process, the above induction voltage causes the coil of the tuner circuit to produce an electromagnetic wave corresponding to the tuning frequency of the tuner circuit. The position detector circuit detects the electromagnetic wave produced from the tuning circuit of the input pen by using the loop coils of the sensing unit, thereby determining the position indicated by the input pen. By alternately repeating the transmission and reception in this way, the position indicated by the input pen can be determined..

In order to reduce an influence of external noise, the position detector circuit is designed to receive the electromagnetic wave produced from the tuning circuit of the input pen, through a bandpass filter allowing passage of a signal of the frequency within a given frequency band with the frequency f01 set as the central frequency.

In the conventional coordinate input apparatus, however, higher harmonics of the clock signal CK02 in the inverter circuit are generated as noise. If any of those higher harmonics of the clock signal CK02 has frequency in match with the frequency f01 of the reference clock signal CK01 for the position detector circuit, or within a given frequency band about the frequency f01 of the reference clock signal CK01, that higher harmonic superposes on a reception signal at the time of receiving the electromagnetic wave transmitted from the tuner circuit in the input pen, resulting in a problem that the coordinate detection accuracy of positions indicated by the input pen deteriorates.

There is further known a coordinate input apparatus which comprises, in addition to the foregoing arrangement, select means for selecting one of a number of loop coils in the sensing unit and connecting it to both the signal generator means and the signal detector means. After selecting one loop coil in the sensing unit, an electromagnetic wave of the frequency f01 is transmitted from the selected loop coil to the input pen. Such a coordinate input apparatus has also had the problem similar to the above one.

The foregoing prior arts refer to no means for solving the problems stated above.

Disclosure of the Invention

A primary object of the present invention is to provide a coordinate input apparatus which can prevent an influence of noise caused by higher harmonics of a clock signal applied to an inverter circuit for lighting up an illuminator such as a backlight.

To achieve the above object, the present invention provides a coordinate input apparatus comprising a combination of a tablet using an electromagnetic wave of first frequency as a signal for detecting coordinates, and an illuminator driven by a signal of second frequency, wherein said first frequency is made different from said second frequency, and said first and second frequencies are set such that higher harmonics of said second frequency fall out of a predetermined frequency band about said first frequency. According to this aspect of the present invention, the electromagnetic wave of the first frequency is used as the signal for detecting the coordinates, and the illuminator is driven by the signal of the second frequency. Since the first frequency is not in match with the second frequency and the higher harmonics of the second frequency are not present within the predetermined frequency band about the first frequency, the higher harmonics of the second frequency caused by the illuminator will not be detected at the time of detecting the coordinates. Accordingly, the coordinate detecting accuracy can be prevented from deteriorating due to an influence of noise given by the higher harmonics.

A second object of the present invention is to provide a coordinate input apparatus of the type selecting one of a number of loop coils in a sensing unit and transmitting an electromagnetic wave from the selected loop coil to an input pen, the apparatus being able to reduce an influence of noise caused by higher harmonics of a clock signal applied to an electric circuit, e.g., an inverter circuit, for lighting up an illuminator such as a backlight.

To achieve the above second object, the present invention provides a coordinate input apparatus comprising a position indicator for indicating a coordinate input position, a tablet having a number of loop coils and performing coordinate detection of a position indicated by said position indicator or state detection of said position indicator by using an electromagnetic wave, an illuminator combined with said tablet, and an electric circuit for generating an alternating current signal to light up said illuminator, wherein a period of time in which each one of said loop coils is being selected to detect the position indicated by said position indicator or the state of said position indicator is set to be in match with integer time(s) a cycle of said alternating current signal.

According to this aspect of the present invention, since the coordinate input position by the position indicator or the state detection of the position indicator is carried out by using the electromagnetic wave, and the period of time in which each loop coil is being selected is set to be in match with integer time(s) the cycle of the alternating current signal to light up the illuminator, that alternating current signal will not become noise. Accordingly, by detecting the electromagnetic wave after the elapse of a certain period of time after the selection of each loop coil, even if higher harmonics of the alternating current signal is superposed on the electromagnetic wave, the higher harmonics always have the same phases and thus can remove an influence caused by themselves. As a result, the coordinate detecting accuracy can be prevented from deteriorating.

A third object of the present invention is to provide another coordinate input apparatus of the type selecting one of a number of loop coils in a sensing unit and transmitting an electromagnetic wave from the selected loop coil to an input pen, the apparatus being able to reduce an influence of noise caused by higher harmonics of a clock signal applied to an inverter circuit for regulating an illuminator such as a backlight.

To achieve the above third object, the present invention provides a coordinate input apparatus comprising a position indicator for indicating a coordinate input position, a tablet having a number of loop coils and performing coordinate detection of a position indicated by said position indicator or state detection of said position indicator by using an electromagnetic wave, an illuminator combined with said tablet, and an electric circuit for generating an alternating current signal to light up said illuminator, wherein a period of time in which each one of said loop coils is being selected to detect the position indicated by said position indicator or the state of said position indicator is set to be in match with integer time(s) a cycle of said alternating current signal, and a light emitted from said illuminator is regulated by changing a period of time from selection of each loop coil until supply of said alternating current signal to said illuminator.

According to this aspect of the present invention, the coordinate input position by the position indicator or the state detection of the position indicator is carried out by using the electromagnetic wave, and the period of time in which each loop coil is being selected is set to be in match with integer time(s) the cycle of the alternating current signal to light up the illuminator. Further, the light emitted from the illuminator is regulated by changing the period of time from selection of each loop coil until the supply of the alternating current signal to the illuminator. Accordingly, by detecting the electromagnetic wave during a non-lighting period of the illuminator, higher harmonics of the alternating current signal will not be caused and thus will not provide any influence, with the result of preventing the coordinate detecting accuracy from deteriorating.

Other objects, arrangements and advantages of the present invention will be apparent from reading the following description.

Brief Description of the Drawings

Fig. 1 is a perspective view showing a general setup of a coordinate input apparatus of the present invention,

Fig. 2 is a sectional view of an input display unit,

Fig. 3(a) is a schematic view of a transparent substrate,

Fig. 3(b) is an enlarged sectional view of the transparent substrate partly omitted,

Fig. 4 is a view showing a detailed arrangement of groups of loop coils in the X- and Y-directions of a sensing unit,

Fig. 5 is a sectional view of a pen,

Fig. 6 is a block diagram of a control device,

Fig. 7 is a block diagram showing details of a tuner circuit, a position detector circuit, an inverter circuit and a clock signal generator circuit in the pen,

Fig. 8 is a chart showing signal waveforms at various points in Fig. 7,

Fig. 9 is a flowchart of the process carried out in a control circuit of the position detector circuit,

Figs. 10(a), 10(b) and 10(c) are timing charts showing basic position detecting operation in the position detector circuit,

Fig. 11 is a chart showing detected voltages obtained from the loop coils in a first cycle of position detecting operation,

Fig. 12 is a timing chart showing the second and subsequent position detecting operations and state discriminating operations,

Fig. 13 is a diagram of a display control circuit,

Fig. 14(a) and 14(b) are graphs showing the relationship between intensity of input/output signals of a band-pass filter and frequency,

Figs. 15(a), 15(b) and 15(c) are charts of waveforms of received signals for explaining a second embodiment of the present invention,

Fig. 16 is a block diagram showing principal circuits in a third embodiment of the present invention, and

Fig. 17 is a chart of waveforms of received signals in Fig. 16.

Best Mode for Carrying out the Invention

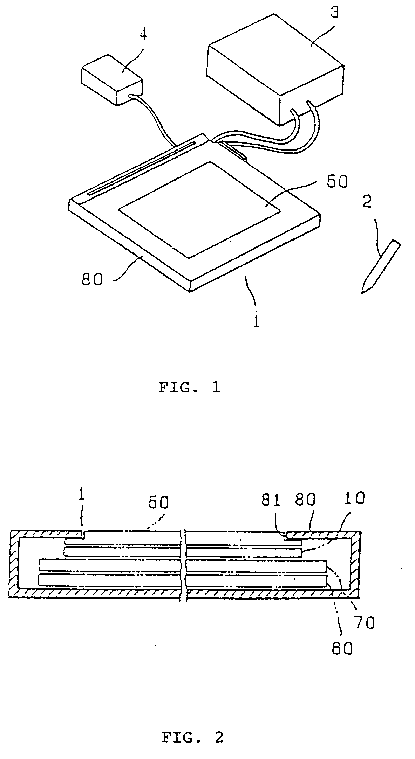

Fig. 1 shows a first embodiment of a coordinate input apparatus of the present invention. In the drawing, denoted by reference numeral 1 is an input display unit for inputting the coordinates, 2 is a position indicator for specifying a position, e.g., a pen or stylus (hereinafter referred to simply as a pen), 3 is a control device, and 4 is a power supply.

Fig. 2 is a sectional view showing a construction of the input display unit 1. As seen from Fig. 2, the input display unit 1 comprises a sensing unit 10 having a transparent substrate, described later in detail, and sensing the coordinates of a position indicated by the pen 2 in the X- and Y-directions, a flat display panel 50 placed on the sensing unit 10 for displaying the coordinates, such as a liquid crystal display panel having a hard core acrylic plate (not shown) disposed on the upper side of the panel, a backlight 60 disposed below the sensing unit 10 and having a reflection plate (not shown) for reflecting a light emitted from the backlight toward the upper liquid crystal display panel 5, a light guide plate 70, e.g., a opal or milky acrylic plate, disposed between the backlight 60 and the sensing unit 10 for illuminating the whole of the liquid display panel 50 with uniform brightness, and a non-metallic case 80 having an opening 81 formed in an upper wall at the center thereof and an inner space able to accommodate the sensing unit 10, the liquid crystal display panel 50, the backlight 60 and the light guide plate 70 together.

The backlight 60 serves to improve contrast of the liquid crystal display panel 50 for brighter display and may be constituted by, for example, a cold cathode tube. By so using a cold cathode tube as the backlight 60, the liquid crystal display panel 50 can be illuminated from below with brightness three or more times lighter than would be the case of using, for example, EL elements as the backlight.

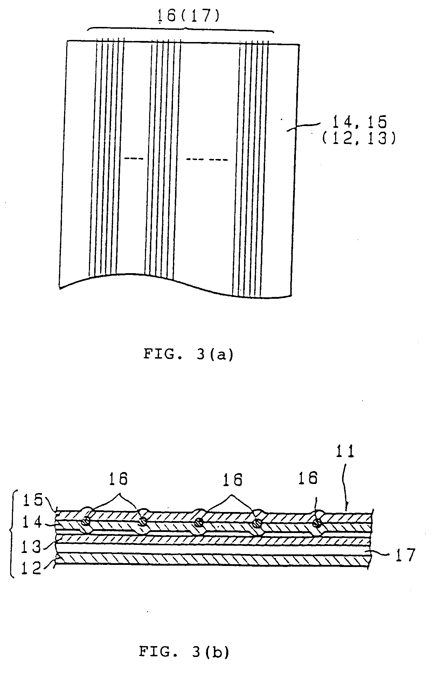

Fig. 3(a) is a schematic view showing a transparent substrate 11 which constitutes the sensing unit 10 of the input display unit 1, and Fig. 3(b) is an enlarged sectional view of the transparent substrate 11 partly omitted. In Fig. 3, denoted by 12, 13, 14, 15 are each a transparent film made of a polyester, polyvinyl chloride, vinyl chloride or the like, 16 is a number of copper wires (soft copper wires plated with tin in practice), e.g., 96 wires, arranged side by side in the Y-direction, and 17 is a number of copper wires, e.g., 96 wires, arranged side by side in the X-direction. These members are assembled as follows. First, the copper wires 17 are arranged side by side between the transparent films 12 and 13, and bonded in place using, for example, a polyethylene-base transparent adhesive. Likewise, the copper wires 16 are arranged side by side between the transparent films 14 and 15, and bonded in place using the similar transparent adhesive. Then, the transparent films 13 and 14 are bonded to each other such that the copper wires 16 cross the copper wires 17 at a right angle, thereby forming the transparent substrate 11. When the side of the transparent film 15 is illuminated by the backlight 60 from the side of the transparent film 12, the transparent film 15 can be applied with the intensity of light enough to illuminate the liquid crystal display panel 50 as bright as mentioned above.

Although the transparent substrate 11 is shown in Fig. 3(b) as having some ruggedness on the surface thereof, a total of the thicknesses of the two transparent films and the diameter of the copper wires is practically less than 0.2 mm in one direction (X- or Y-direction) and thus can be essentially ignored.

When fabricating the sensing unit 10 by the use of the transparent substrate 11, the transparent substrate 11 is disposed at the center of a frame base (not shown), following which the copper wires 16 and 17 are connected to corresponding patterns on the frame base by soldering, for example, so that a number of loop coils are formed for sensing coordinate values in the X- and Y-directions. Note that the copper wires 16, 17 exposed or extended from the transparent substrate 11 may be covered with an insulator except for the soldered portions.

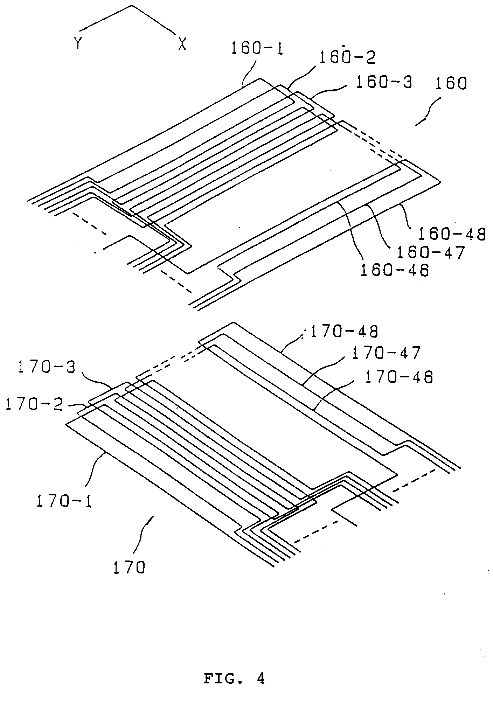

Fig. 4 shows details of a loop coil group 160 for detecting a coordinate value in the X-direction and a loop coil group 170 for detecting a coordinate value in the Y-direction. The loop coil group 160 in the X-direction comprises a number of loop coils, e.g., in number 48, 160-1, 160-2,..., 160-48 which are arranged to extend in the Y-direction parallel to each other. Also, the loop coil group 170 in the Y-direction comprises a number of loop coils, e.g., in number 48, 170-1, 170-2,..., 170-48 which are arranged to extend in the X-direction parallel to each other. As shown in Fig. 3(b), the loop coil group 160 in the X-direction and the loop coil group 170 in the Y-direction are overlaid one above the other in closely intimate relation with the transparent films 13, 14 therebetween (though both the groups are shown as being spaced from each other in the drawing for better understanding).

While each loop coil has one turn in the illustrated embodiment, it may have plural turns, if necessary.

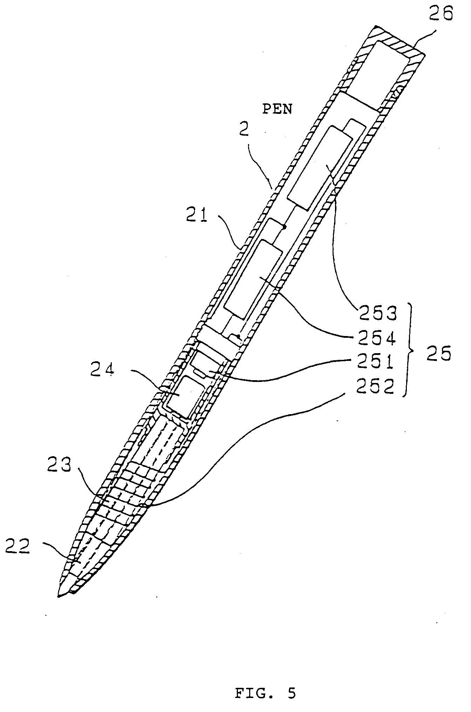

Fig. 5 is a sectional view showing a detailed structure of the pen 2. Within a pen shaft 21 made of non-metallic material such as synthetic resin, there are housed a core member 22 such as a ball-point pen, a ferrite core 23 provided with a through hole which can slidably accommodate the core member 22, a coiled spring 24, and a tuner circuit 25 comprised of a switch 251, a coil 252 wound around the ferrite core 23 and capacitors 253, 254 in this order from the tip end of the pen, these components being combined together with each other. A cap 26 is attached to the rear end of the pen,

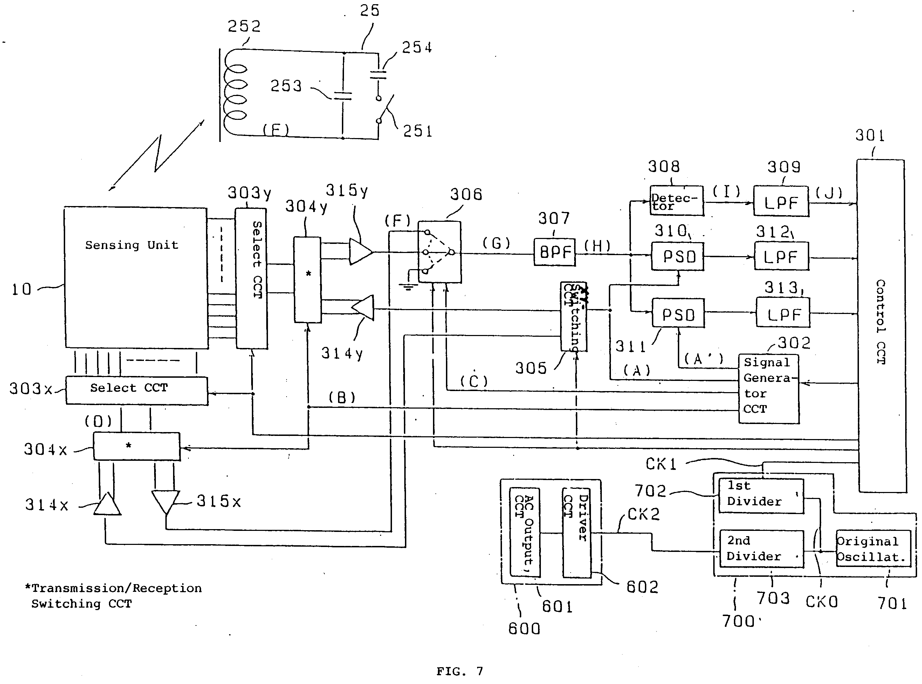

The coil 252 and the capacitor 253 are interconnected in series as shown also in Fig. 7, described later, to constitute a well-known resonance circuit. Characteristic values of the coil 252 and the capacitor 253 are selected such that a resonance (tuning) is developed at predetermined frequency f1 with the phases of voltage and current being in phase. Further, the capacitor 254 is connected in parallel to both ends of the capacitor 253 via the switch 251. When the switch 251 is turned on, the capacitor 254 serves to retard the phase of current in the aforesaid resonance circuit, thereby retarding the phase of a reception signal (described later) by a predetermined angle. The switch 251 is turned on in such a manner that when the pen shaft 21 is held by a hand or the like and the tip end of the core member 22 is pressed upon the upper surface of the input display unit 1, the core member 22 is pushed into the pen shaft 21 to thereby press at its rear end the switch 251 via the coiled spring 24.

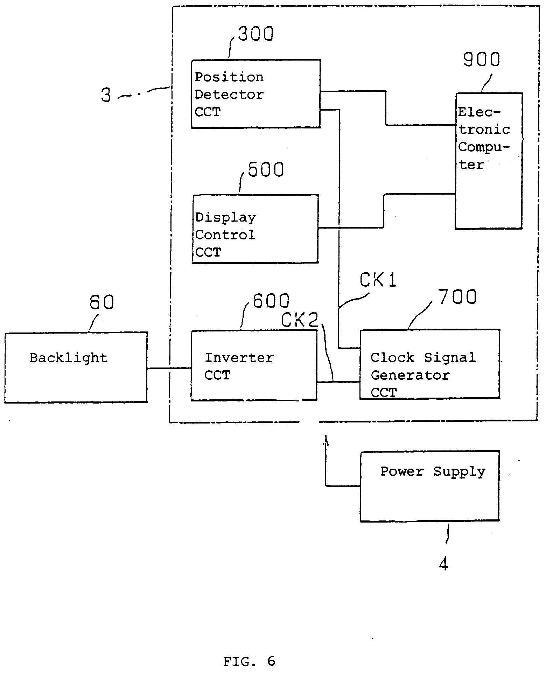

The control device 3 comprises, as shown in Fig. 6, a position detector circuit 300 for controlling the sensing unit 10, a display control circuit 500 for controlling the liquid crystal display panel 50, an electronic computer 900 for controlling those circuits 30 and 500 under supervision thereof, an inverter circuit 600, and a clock signal generator circuit 700 for outputting a clock signal CK1 of frequency f1 to the position detector circuit 300 and a clock signal CK2 of frequency f2 to the inverter circuit 600, respectively. The position detector circuit 300 and the inverter circuit 600 are operated by the clock signals CK1 and CK2, respectively. Further, the sensing unit 10 and the position detector circuit 300 jointly constitute the tablet.

The power supply 4 comprises well-known components such as a rectifier, a transformer and a DC - DC converter, and supplies electric power to each circuit in the control device 3.

Fig. 7 is a block diagram showing details of the tuner circuit 25, the position detector circuit 300, the inverter circuit 600 and the clock signal generator circuit 700. In Fig. 7, denoted by 301 is a control circuit, 302 is a signal generator circuit, and 303x, 303y are select circuits in the X- and Y-directions, respectively. Denoted by 304x, 304y are each a transmission/reception switching circuit, 305 is an XY switching circuit, and 306 is a reception timing switching circuit. Furthermore, denoted by 307 is a band-pass filter (BPF), 308 is a detector or rectifier, 309 is a low-pass filter (LPF), 310, 311 are phase detectors (PSD), and 312, 313 are low-pass filters (LPF). In addition, 314x, 314y are drive circuits and 315x, 315y are amplifiers.

The inverter circuit 600 comprises an AC output circuit 601 and a driver 602 operated by a clock signal CK2 of the frequency f2, described later, so that DC voltage is converted into AC voltage of the frequency f2 at 300 V and then inputted therefrom. The AC output circuit 601 consists of two switching transistors, a transformer and others. The driver 602 alternately drives the two switching transistors of the AC output circuit 601 based on the clock signal CK2.

The clock signal generator circuit 700 comprises an original oscillator 701, a first frequency divider 702 and a second frequency divider 703. The original oscillator 701 generates a clock signal CK0 of frequency f0, for example, 1000 KHz. The first frequency divider 702 receives the clock signal CK0 and outputs a clock signal CK1 of frequency f1 equal to f0/2, i.e., 500 KHz. The second frequency divider 703 receives the clock signal CK0 and outputs a clock signal CK2 of frequency f2 equal to f0/25, i.e., 40 KHz.

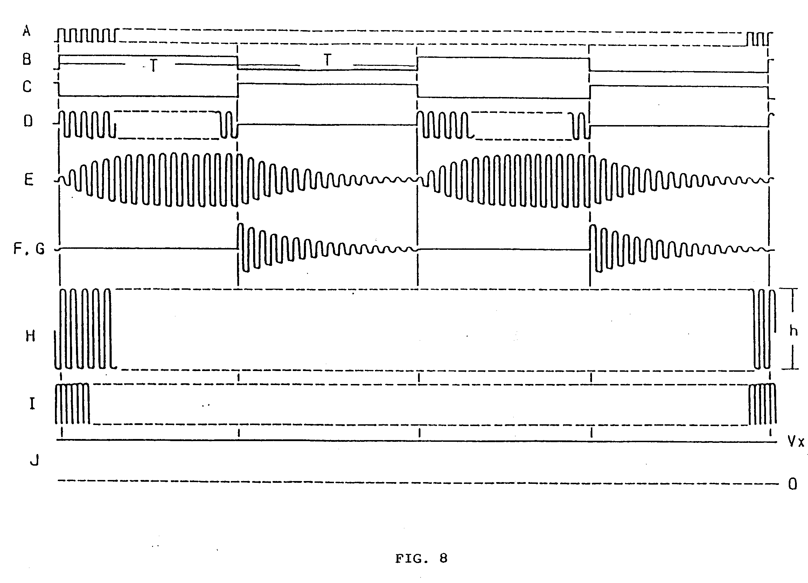

Operation of the position detector circuit 300 will be next described along with its detailed arrangement. Before entering the description, however, the manner of transmitting and receiving an electromagnetic wave between the sensing unit 10 and the pen 2 for the detection of position, as well as signals produced in this process will be first explained with reference to Fig. 8.

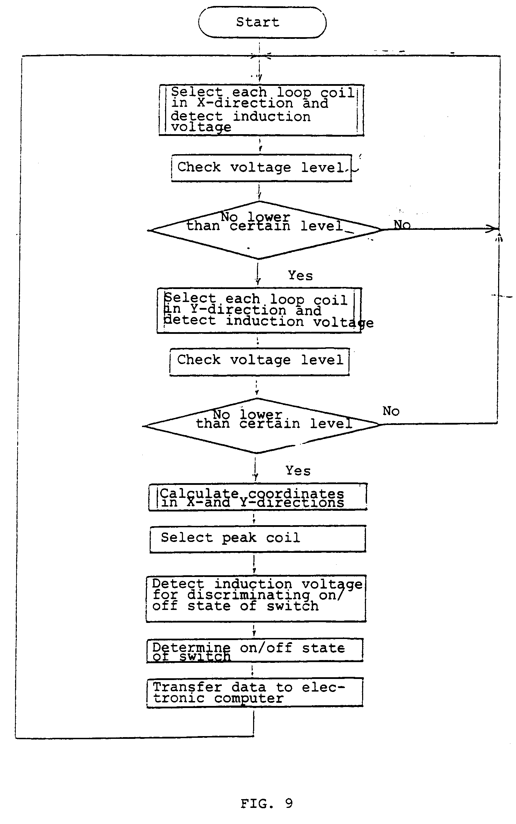

The control circuit 301 comprises a well-known microprocessor or the like, and serves to control the signal generator circuit 302, control switching-over of the loop coils in the sensing unit 10 from one to another via the select circuits 303x and 303y, control switching-over of the coordinate detecting direction for the XY switching circuit 305 and the reception timing switching circuit 306, convert output values from the low-pass filters 309, 312, 313 through analog/digital (A/D) conversion, execute the operation process, described later, for calculating coordinate values of a position indicated by the pen 2, discriminate the state of the switch in the pen 2, and further deliver the resulting signals to the electronic computer 900, in accordance with a flowchart shown in Fig. 9.

The select circuit 303x sequentially selects one loop coil out of the loop coil group 160 in the X-direction and the select circuit 303y sequentially selects one loop coil out of the loop coil group 170 in the Y-direction, these select circuits being operated based on information from the control circuit 301.

The transmission/reception switching circuit 304x alternately connects the selected one loop coil in the X-direction to the drive circuit 314x and the amplifier 315x, whereas the transmission/reception switching circuit 304y alternately connects the selected one loop coil in the Y-direction to the drive circuit 314y and the amplifier 314y. These switching circuits 304x and 304y are operated in response to a transmission/reception switching signal described later.

The signal generator circuit 302 generates a square wave signal A of predetermined frequency f1, e.g., 500 KHz, a signal A' (not shown) resulted from retarding the phase of the square wave signal A by a predetermined angle, a transmission/reception switching signal B and a reception timing signal C, the last two signals having predetermined frequency fk, e.g., 15.625 KHz. The square wave signal A is delivered to the phase detector 310, and also converted into a sine wave signal by a low-pass filter (not shown), followed by being delivered to either one of the drive circuits 314x and 314y via the XY switching circuit 305. The square wave signal A' is delivered to the phase detector 311. The transmission/reception switching signal B is delivered to both the transmission/reception switching circuits 304x and 304y. Further, the reception timing signal C is delivered to the reception timing switching circuit 306.

Assuming now that the information for selecting the X-direction is being inputted from the control circuit 301 to the XY switching circuit 305 and the reception timing switching circuit 306, the aforesaid sine wave signal is delivered to the drive circuit 314x for conversion into a balanced signal which is then delivered to the transmission/reception switching circuit 304x. However, since the transmission/reception switching circuit 304x is switched over to be alternately connected to the drive circuit 314x and the amplifier 315x based on the transmission/reception switching signal B, the signal outputted from the transmission/reception switching circuit 304A to the select circuit 303x is given by a signal D which provides pulses of 500 KHz and no pulses with intervals of time T (= 1/2 fk), that is, 32 $\mu$sec in this embodiment.

The above signal D is delivered to one loop coil 160-i (i = 1, 2,..., 48) in the X-direction of the sensing unit 10 via the select circuit 303x, whereupon the loop coil 160-i generates an electromagnetic wave based on the signal D.

At this time, when the pen 2 is held in a substantially upright state, i.e., a used state, on the input display unit 1, the electromagnetic wave based on the signal D excites the coil 252 in the pen 2 so that the tuner circuit 25 in the pen 2 produces induction voltage E in synchronism with the signal D.

Thereafter, when the signal D enters the period free of pulses, i.e., the reception period, and the loop coil 160-i is switched over for connection to the amplifier 315x, the electromagnetic wave from the loop coil 160-i immediately disappears, whereas the induction voltage E gradually attenuates depending on the loss of the tuner circuit 25.

On the other hand, the current flowing through the tuner circuit 25 due to the induction voltage E transmits an electromagnetic wave from the coil 252. This electromagnetic wave reversely excites the loop coil 160-i connected to the amplifier 315x so that the loop coil 160-i now produces induction voltage due to the electromagnetic wave from the coil 252. This induction voltage is delivered from the transmission/reception switching circuit 304x to the amplifier 315x only during the reception period for amplification into a reception signal F which is then delivered to the reception timing switching circuit 306.

The reception timing switching circuit 306 is applied with both the information for selecting either the X- or Y-direction, e.g., the information for selecting the X-direction in this case, and the reception timing signal C essentially as an inverted one of the transmission/reception switching signal B, so that the circuit 306 outputs the reception signal F during a period in which the signal C is at a high (H) level, and no signal during a period in which the signal C is at a low (L) level. Therefore, a signal G (essentially the same as the reception signal F) can be obtained at an output of the reception timing switching circuit 306.

The signal G is delivered to the band-pass filter 307. The band-pass filter 307 is a ceramic filter allowing passage of a signal within a given frequency band of $\pm 10$ KHz with the frequency f1 set as the central frequency, so that a signal H with an amplitude h depending on energy of the signal which is contained in the signal G and located within the given frequency band is delivered to the detector 308 and the phase detectors 310, 311 (strictly speaking, the signal H being obtained under a condition that the several signals G are inputted into the band-pass filter 307 and then settled).

The signal H inputted to the detector 308 is rectified thereby into a signal I which is converted by the low-pass filter 309 having sufficiently low cut-off frequency into a DC signal J having a voltage value, e.g., Vx, corresponding to about 1/2 of the amplitude h, followed by being delivered to the control circuit 301.

The voltage value Vx of the signal J takes a value depending on the distance between the pen 2 and the loop coil 160-i, that is, a value almost inversely proportional to the fourth power of the distance, and varies each time the loop coil 160-i is switched over. Therefore, the X-direction coordinate value of a position indicated by the pen 2 can be calculated by causing the control circuit 301 to convert the voltage value Vx obtained for each loop coil into a digital value and then execute the operation process (described later) for the resulting digital values. Moreover, the Y-direction coordinate value of the position indicated by the pen 2 can be calculated in a like manner.

Meanwhile, the square wave signal A is applied as a detection signal to the phase detector 310. Assuming now that the switch 251 in the pen 2 is turned off and the phase of the signal H is substantially in match with the square wave signal A, the phase detector 310 outputs a signal (essentially the same as the signal I) resulted from inverting the signal H to the positive side. This signal is converted by the low-pass filter 312 like the above low-pass filter 309 into a DC signal (essentially the same as the signal J) having a voltage value corresponding to about 1/2 of the amplitude h, the DC signal being delivered to the control circuit 301.

Further, the square wave signal A' is applied as a detection signal to the phase detector 311. Assuming now that the switch 251 in the pen 2 is turned off and the phase of the signal H is in advance of the square wave signal A' by a predetermined angle as mentioned above, the phase detector 311 outputs a signal having components on both the positive and negative sides. This signal is converted by the low-pass filter 313 like the above low-pass filters 309, 312 into a DC signal which is then delivered to the control circuit 301. However, since the output signal of the phase detector 311 has components on both the positive and negative sides, the low-pass filter 313 produces an output of which voltage value is fairly smaller than that of the output of the low-pass filter 312.

When the switch 251 in the pen 2 is now turned on, the phase of the current flowing through the tuner circuit 25 is retarded with respect to the induction voltage E, whereby the phase of the reception signal F is also retarded by a predetermined angle so as to substantially match with the phase of the square wave signal A'. At this time, therefore, the output H of the band-pass filter 307 is given by a signal having components on both the positive and negative sides through the phase detector 310, so that the output of the low-pass filter 312 takes a voltage value nearly equal to that of the output of the low-pass filter 313 as in the above case where the switch 251 is turned off. On the other hand, the output H is given by a signal inverted to the negative side through the phase detector 311, so that the output of the low-pass filter 313 comes to a DC signal having a predetermined voltage value corresponding to about 1/2 of the amplitude h as with the output of the low-pass filter 312 in the above case.

In this way, since the output of the low-pass filter 312 takes a predetermined voltage value when the switch 251 is turned off, and the output of the low-pass filter 313 takes a predetermined voltage value when the switch 251 is turned on, whether the switch 251 is turned off or on can be discriminated by monitoring output values of the low-pass filters 312 and 313 in the control circuit 301. Note that the information indicating the discriminated turned-on (or turned-off) state of the switch 251 is used as, for example, information to specify the one among the coordinate values of positions indicated by the pen 2 which is to be actually inputted.

Operation of the entire apparatus will be next explained by referring to Figs. 9 to 12 along with details of the coordinate detecting operation in the position detector circuit 300 and the operation of discriminating the state of the pen 2, that is, the on/off state of the switch 251 in this embodiment.

First, when the entire apparatus is powered on and brought into a state ready for starting a measurement, the control circuit 301 delivers the information for selecting the X-direction to both the XY switching circuit 305 and the reception timing switching circuit 306, and also sends the information for selecting the first one 160-1 of the loop coils 160-1 to 160-48 in the X-direction of the sensing unit 10 to the select circuit 303x, thereby connecting the loop coil 160 to the transmission/reception switching circuit 304x.

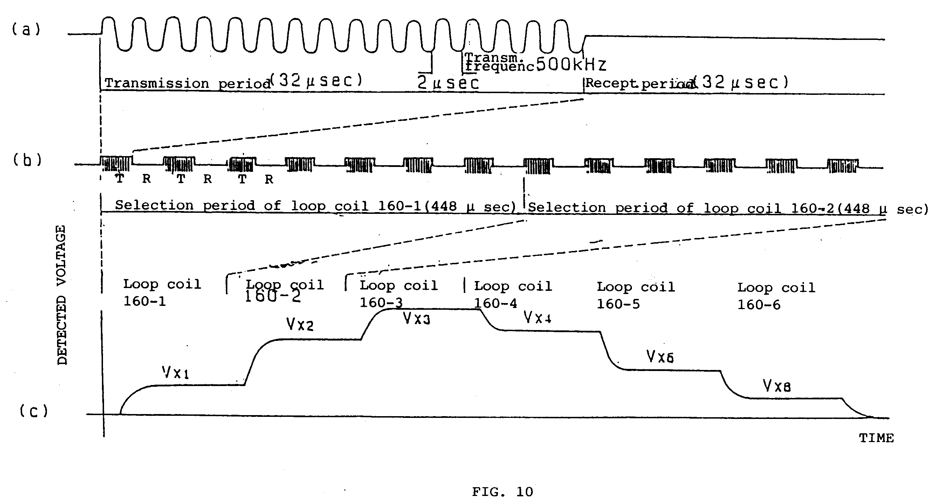

Based on the transmission/reception switching signal B, the transmission/reception switching circuit 304x makes a control such that the loop coil 160-1 is alternately switched over to the drive circuit 314x and the amplifier 315x. In this connection, during the transmission period of 32 $\mu$sec, the drive circuit 314x delivers 16 pulses of sine wave signals of 500 KHz, as shown in Fig. 10(a), to the loop coil 160-1.

The switching-over between the transmission and the reception is repeated seven times for one loop coil, that is, 160-1 in this case, as shown in Fig. 10(b). The total period required for the transmission and the reception to be repeated seven times corresponds to a selection period (448 $\mu$sec) of one loop coil.

With such a design, the output of the amplifier 315x produces the induction voltage for each of the seven reception periods from one loop coil. As mentioned before, the resulting seven signals of the induction voltage are delivered to and averaged by the band-pass filter 307 through the reception timing switching circuit 306, followed by being delivered to the control circuit 301 through the detector 308, the phase detectors 310, 311 and the low-pass filters 309, 312, 313.

The control circuit 301 receives an output value of the low-pass filter 309 after A/D conversion, and temporarily stores it as the detected voltage, e.g., Vx1, depending on the distance between the pen 2 and the loop coil 160-1.

Then, the control circuit 301 sends the information for selecting the loop coil 160-2 to the select circuit 303x, whereupon the selected loop coil 160-2 is connected to the transmission/reception switching circuit 304x so that detected voltage Vx2 depending on the distance between the pen 2 and the loop coil 160-2 is obtained to be stored. Subsequently, in a like manner, the loop coils 160-2 to 160-48 are successively connected to the transmission/-reception switching circuit 304x so that, as shown in Fig. 10(c), the detected voltages Vx1 to Vx48 depending on the X-direction distances between the respective loop coils and the pen 2 are stored (though Fig. 10(c) shows only part of the detected voltages in analog fashion).

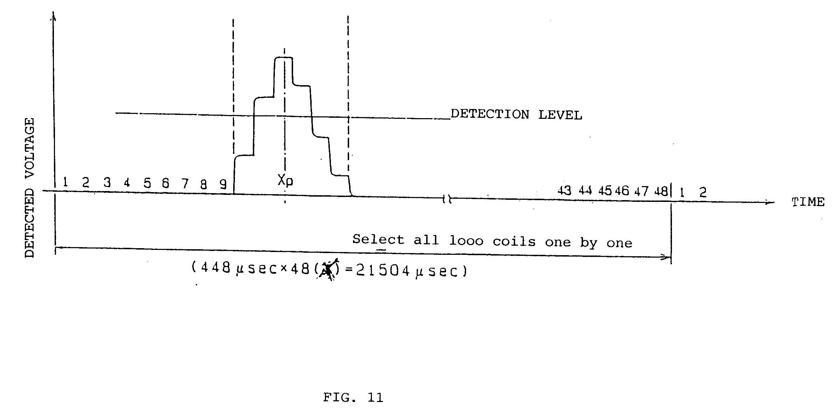

In practice, the detected voltage is obtained from only those several loop coils in the front and rear sides about a position (xp) at which the pen 2 is placed, as shown in Fig. 11.

The control circuit 301 checks whether a voltage value of any detected voltage stored as stated above is not lower than a certain detection level. If the voltage value is lower than the certain detection level, then the control circuit 301 repeats again the selection of each loop coil in the X-direction and the detection of voltage. If the voltage value is not lower than the certain detection level, then the control circuit 301 goes to a next process.

Following that, the control circuit 301 delivers the information for selecting the Y-direction to both the XY switching circuit 305 and the reception timing switching circuit 306, whereupon the select circuit 303y and the transmission/reception switching circuit 304x are switched over as with the above case, so that the detected voltages depending on the distances between the pen and the respective loop coils 170-1 to 170-48 in the Y-direction are temporarily stored which are obtained through A/D conversion of the output value of the low-pass filter 309 resulted from the transmission and the reception of electromagnetic waves. Afterward, a level check is performed in a like manner to the above. Thus, if the voltage value is lower than the certain detection level, then the control circuit 301 returns again to the selection of each loop coil in the X-direction and the detection of voltage. If the voltage value is not lower than the certain detection level, then the control circuit 301 calculates coordinate values of the position indicated by the pen 2 in the X- and Y-directions from the stored voltage values as described later.

Next, the control circuit 301 delivers, to the select circuit 303x (or 303y), the information for selecting that one among the loop coils 160-1 to 160-48 in the X-direction (or the loop coils 170-1 to 170-48 in the Y-direction) from which the maximum detected voltage has been obtained, followed by repeating the process of transmitting and receiving the electromagnetic wave in plural times, e.g., seven times. Then, the output values obtained from the low-pass filters 312 and 313 are subjected to A/D conversion to detect whether or not any of those output values is not lower than a predetermined value, thereby discriminating the on/off state of the switch 251.

The discriminated result relating to the on/off state of the switch 251 is transferred to the electronic computer 900 along with the foregoing coordinate values of the position indicated by the pen 2 in the X- and Y-directions.

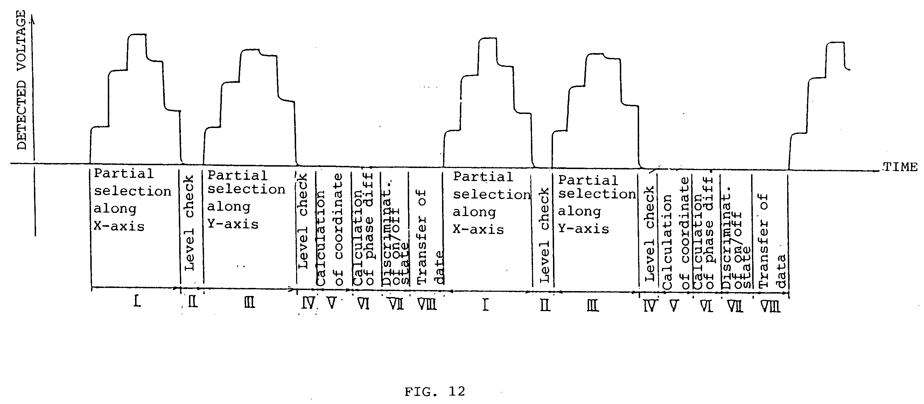

After a first cycle of the coordinate detecting operation and the state determining operation is completed in this way, the control circuit 301 performs the second and subsequent coordinate detecting operations as shown in Fig. 12. Specifically, the control circuit 301 delivers, to the select circuit 303x, the information for selecting only those loop coils in certain number, e.g., 10, in the front and rear sides about that one among the loop coils 160-1 to 160-48 in the X-direction from which the maximum detected voltage has been obtained, and also delivers, to the select circuit 303y, the information for selecting only those loop coils in certain number, e.g., 10, in the front and rear sides about that one among the loop coils 170-1 to 170-48 in the Y-direction from which the maximum detected voltage has been obtained. Then, it obtains the output values to carry out the coordinate detecting operation of the pen 2 in the X- and Y-directions and the operation of discriminating the on/off state of the switch 251 in a like manner to the above, following by transferring the coordinate values and the discriminated result thus obtained to the electronic computer 900. Subsequently, the above steps will be repeated.

The above-mentioned level check will now be explained in detail. This is the process to check not only whether or not the maximum value of detected voltage reaches the detection level, but also which one of the loop coils produces the detected voltage of maximum value, to stop the subsequent coordinate calculations and so forth if the maximum value does not reach the detection level, and further to set the center of those loop coils to be selected for a next cycle of the coordinate detecting operation and the state determining operation.

One of methods for calculating the coordinate value in the X- or Y-direction, e.g., the aforesaid coordinate value xp may be practiced by approximating the waveform near the maximum value among the detected voltages Vx1 to Vx48 with an appropriate function, and determining the coordinates of a maximum value of the function.

In Fig. 10(c), for example, if the detected voltage Vx3 of the maximum value and the detected voltages Vx2, Vx4 on both sides thereof are approximated by a secondary function, the coordinate value xp can be calculated as follows (on assumptions that the coordinate values of central positions of the loop coils 160-1 to 160-48 are x1 to x48, respectively, and the spacing between every two adjacent loop coils is $\Delta x$). First, from the detected voltages and their coordinate values;

$$Vx2 = a(x2 - xp)^2 + b \qquad (1)$$

$$Vx3 = a(x3 - xp)^2 + b \qquad (2)$$

$$Vx4 = a(x4 - xp)^2 + b \qquad (3)$$

where a, b are constants (a < 0). Also, there hold;

$$x3 - x2 = \Delta x \qquad (4)$$

$$x4 - x2 = 2\Delta x \qquad (5)$$

By substituting the equations (4), (5) into the equations (2), (3), the resultant equation is rearranged as follows:

$$xp = x2 + \Delta x/2\{(3Vx2 - 4Vx3 + Vx4)/(Vx2 - 2Vx3 + Vx4)\} \qquad (6)$$

Accordingly, the coordinate value xp of the position indicated by the pen 2 can be calculated by extracting the detected voltage of maximum value and the preceding and succeeding detected voltages, which have been determined with the aforesaid level check, out of the detected voltages Vx1 to Vx48, and then performing calculations equivalent to the equation (6) from those detected voltages and the coordinate value (known) of the loop coil one in advance of that loop coil from which the detected voltage of maximum value has been obtained.

Each coordinate value thus detected is indicated on the liquid crystal display panel 50 under control of the display panel control circuit 500 for each cycle of detection.

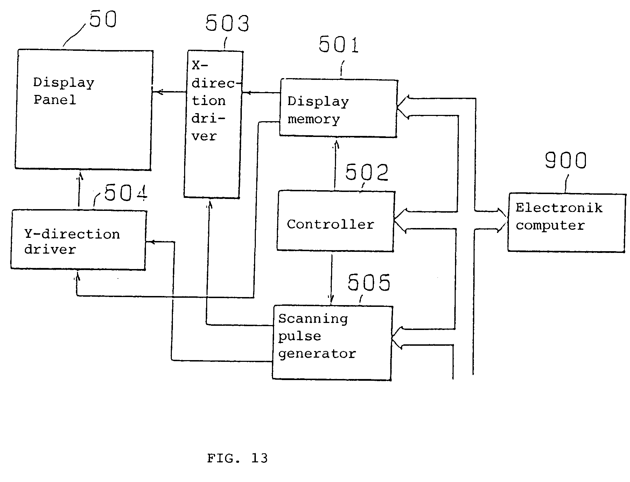

Fig. 13 shows details of the display control circuit 500. The position data comprising X-direction data and Y-direction data successively indicated in the sensing unit 10 are inputted to the electronic computer 900 and then stored in a display memory 501 in which the data are arrayed following a certain sequence. Also, the position data are successively read out of the display memory 501 by a timing pulse from a controller 502 as a display processor to be outputted to an X-direction driver 503 and a Y-direction driver 504.

Furthermore, a scanning pulse issued from a scanning pulse generator 505 is inputted to both the X-direction driver 503 and the Y-direction driver 504 in synchronism with the timing pulse from the controller 502, whereupon the drivers 503, 504 apply the position data in the X- and Y-directions to the liquid crystal display panel 50 so that the position indicated by the pen 2 on the sensing unit 10 is displayed at the same position on the liquid crystal display panel 50. Accordingly, handwritings of characters and/or figures written by the pen 2 from above the liquid crystal display panel 50, which is overlaid on the sensing unit 10, can be displayed on the liquid crystal display panel 50 as they are with sufficient brightness under the action of the backlight 60 and the light guide plate 70 disposed below the sensing unit 10.

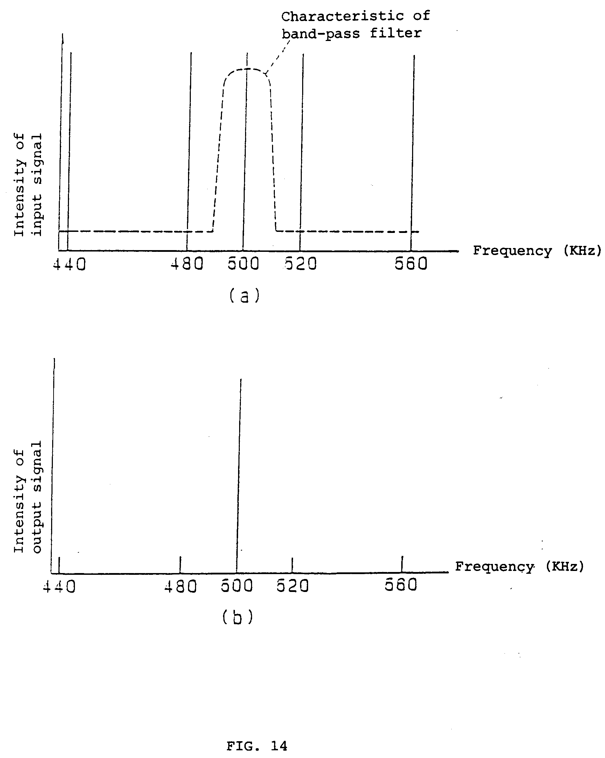

When the backlight 60 is lighted up, the inverter circuit 600 is operated while causing noise due to higher harmonics of the clock signal CK2. As seen from the relationship between intensity of input/output signals of the band-pass filter 307 and frequency shown in Fig. 14, however, frequencies of the higher harmonics of the clock signal CK2 will neither be in match with the frequency f1 of the clock signal CK1, nor be included within a passage frequency range of the band-pass filter 307. As a result, the apparatus will not malfunction upon detecting the noise caused by the higher harmonics of the clock signal CK2.

It is needless to say that the number and pattern of loop coils are illustrated in this embodiment by way of example only, and the present invention is not limited thereto. Of course, a cursor may be used in place of the stylus pen.

While the coordinate input apparatus equipped with the backlight is used in this embodiment, the similar operating effect can be provided so long as the coordinate input apparatus has even such an illuminator equipped with an inverter circuit as other than the backlight.

In addition, while the sensing unit 10 is disposed below the liquid crystal display panel 50 and the backlight 60 is disposed below the sensing unit 10 in this embodiment, the present invention is not limited to such an arrangement and the similar operating effect can be obtained even with other arrangements that those members are overlaid in different orders.

Furthermore, although this embodiment uses the coordinate input apparatus in which an electromagnetic wave is transmitted from the tablet side to the position indicator side and the reflected electromagnetic wave is received to perform the detection of position and so forth, the present invention is also applicable to another well-known coordinate input apparatus of electromagnetic induction type in which an electromagnetic wave transmitted from the tablet side is received by the position indicator side, or an electromagnetic wave transmitted from the position indicator side is received by the tablet side.

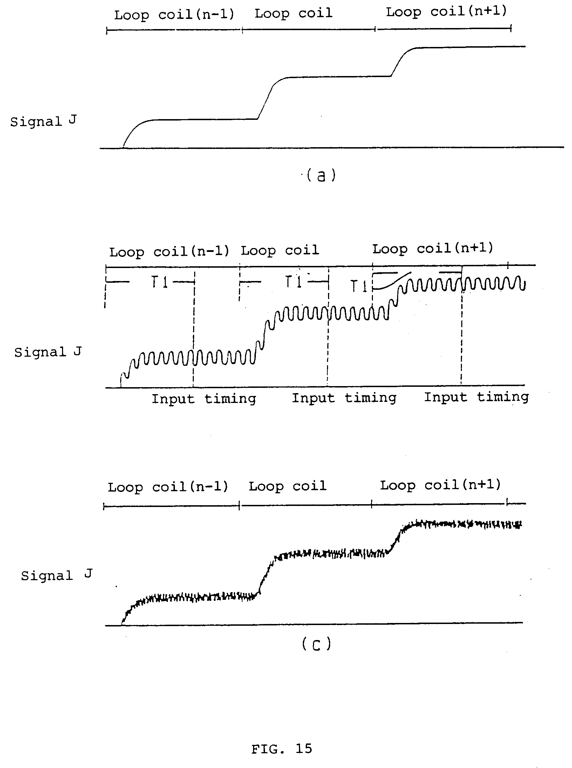

A second embodiment will be next described with reference to Fig. 15. This embodiment has almost the same arrangement as the above first embodiment, but is different therefrom as follows. First, the second frequency divider 703 receives the clock signal CK0 and outputs a clock signal CK2 of frequency f2 equal to f0/32, i.e., 31.25 KHz.

Secondly, after the elapse of a preset period of time T1 from the selection of the loop coil 160-1, the control circuit 301 receives an output value J of the low-pass filter 309 through A/D conversion, and temporarily stores the detected voltage, e.g., Vx1, depending on the distance between the pen 2 and the loop coil 160-1.

When the inverter circuit 600 is not in an operative mode, the output signal J of the low-pass filter 309 is applied as a signal free of noise like the signal waveform shown in Fig. 15(a). On the other hand, when the inverter circuit 600 is in an operative mode, the output signal J of the low-pass filter 309 is applied as a signal superposed with the clock signal CK2 for the inverter circuit 600 and higher harmonics thereof. In this embodiment, however, since the clock signal CK1 is in synchronism with the clock signal CK2, the low-pass filter 309 produces the signal J having the signal waveform as shown in Fig. 15(b), for example. If the clock signal CK1 is not in synchronism with the clock signal CK2, the phase of the superposed signal from the inverter circuit is different for each scan, thus resulting in the signal waveform not constant in its signal level as shown in Fig. 15(c).

Since the control circuit 301 receives the signal J after the preset period of time T1 from the selection of one loop coil, it detects a level of the signal J at such points as where the higher harmonics superposed on the reception signal always have the same phases. This enables to remove an influence upon the detection of signal level due to the superposed higher harmonics. Note that the actually detected voltage appears only in several loop coils in the front and rear sides about the position (xp) at which the pen 2 is placed, as shown in Fig. 11.

A third embodiment of the present invention will be next described.

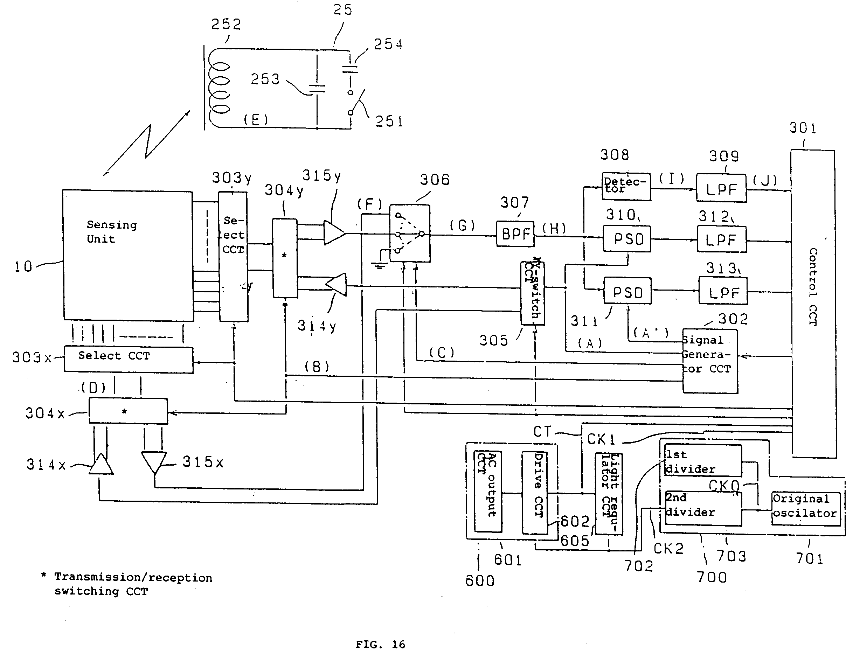

Fig. 16 is a block diagram showing details of the tuner circuit 25, the position detector circuit 300, the inverter circuit 600 and the clock signal generator circuit 700 in the stylus pen 2 of the third embodiment. In Fig. 16, the same components as those in the second embodiment are denoted by the same reference numerals. This embodiment is different from the second embodiment in that a light regulator circuit 650 is added to control operation of the inverter circuit 600.

The light regulator circuit 650 outputs, to both the inverter circuit 600 and the control circuit 301, a signal CT indicating a lighting period and a non-lighting period of the backlight 60 within a cycle during which time one loop cycle of the sensing unit 10 is being selected. The ratio of the lighting period to the non-lighting period is set in a variable manner. The inverter circuit 600 is operated during the light period of the signal CT to regulate the light emitted from the backlight 60.

Also, the third embodiment operates differently from the second embodiment in the timing for the control circuit 301 to receive the output value J of the low-pass filter 309 through A/D conversion.

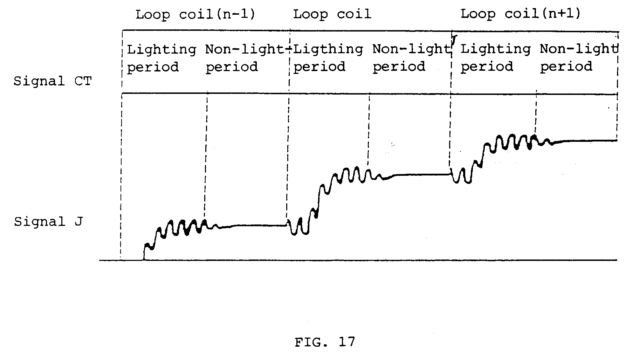

In the third embodiment, the control circuit 301 receives the output value J of the low-pass filter 309 through A/D conversion during the non-lighting period of the backlight 60 in which one loop coil of the sensing unit 10 is being selected, and then temporarily stores the detected voltage depending on the distance between the pen 2 and the loop coil. During the non-lighting period, the inverter circuit 600 is stopped in its operation so that no AC voltage is outputted to the backlight 60. As a result, as shown in Fig. 17, the higher harmonics of the clock signal CK2 for the inverter circuit 600 will not superpose on the signal J, allowing the control circuit 301 to detect a stable signal level. Consequently, it is possible to prevent a malfunction due to noise.

## Claims

1. A coordinate input apparatus comprising a combination of a tablet using an electromagnetic wave of first frequency as a signal for detecting coordinates, and an illuminator driven by a signal of second frequency, wherein:
said first frequency is made different from said second frequency, and said first and second frequencies are set such that higher harmonics of said second frequency fall out of a predetermined frequency band about said first frequency.

2. A coordinate input apparatus according to claim 1, wherein said tablet has a number of loop coils, and said electromagnetic wave of the first frequency is used to perform coordinate detection of a position indicated by a position indicator or state detection of said position indicator.

3. A coordinate input apparatus according to claim 1 or 2, wherein a backlight is incorporated as said illuminator in said tablet.

4. A coordinate input apparatus according to claim 3, wherein a cold cathode ray tube is used as said backlight.

5. A coordinate input apparatus according to claim 3 or 4, wherein said backlight is connected to said inverter circuit driven by said signal of the second frequency.

6. A coordinate input apparatus according to claim 5, wherein said position indicator includes a tuner circuit adapted to tune with said electromagnetic wave of the first frequency.

7. A coordinate input apparatus comprising a position indicator for indicating a coordinate input position, a tablet having a number of loop coils and performing coordinate detection of a position indicated by said position indicator or state detection of said position indicator by using an electromagnetic wave, an illuminator combined with said tablet, and an electric circuit for generating an alternating current signal to light up said illuminator, wherein:
a period of time in which each one of said loop coils is being selected to detect the position indicated by said position indicator or the state of said position indicator is set to be in match with integer time(s) a cycle of said alternating current signal.

8. A coordinate input apparatus according to claim 7, wherein a backlight is incorporated as said illuminator in said tablet.

9. A coordinate input apparatus according to claim 7 or 8, wherein a cold cathode ray tube is used as said backlight.

10. A coordinate input apparatus according to claim 8 or 9, wherein said backlight is connected to said inverter circuit driven by a signal of second frequency.

11. A coordinate input apparatus according to claim 10, wherein said position indicator includes a tuner circuit adapted to tune with an electromagnetic wave of first frequency.

12. A coordinate input apparatus comprising a position indicator for indicating a coordinate input position, a tablet having a number of loop coils and performing coordinate detection of a position indicated by said position indicator or state detection of said position indicator by using an electromagnetic wave, an illuminator combined with said tablet, and an electric circuit for generating an alternating current signal to light up said illuminator, wherein:

a period of time in which each one of said loop coils is being selected to detect the position indicated by said position indicator or the state of said position indicator is set to be in match with integer time(s) a cycle of said alternating current signal, and

a light emitted from said illuminator is regulated by changing a period of time from selection of each loop coil until supply of said alternating current signal to said illuminator.

13. A coordinate input apparatus according to claim 12, wherein a backlight is incorporated as said illuminator in said tablet.

14. A coordinate input apparatus according to claim 12 or 13, wherein a cold cathode ray tube is used as said backlight.

15. A coordinate input apparatus according to claim 14, wherein said backlight is connected to said inverter circuit driven by a signal of second frequency.

16. A coordinate input apparatus according to claim 15, wherein said position indicator includes a tuner circuit adapted to tune with an electromagnetic wave of first frequency.

FIG. 1

FIG. 2

16(17)

14, 15
(12, 13)

FIG. 3(a)

11

16     16     16

15
14
13
12

17

FIG. 3(b)

14

FIG. 4

FIG. 5

FIG. 6

FIG. 7

*Transmission/Reception Switching CCT

FIG. 8

EP 0 463 163 A1

FIG. 9

(a)

Transm. frequenc 500kHz

Transmission period (32μsec)     2μsec     Recept.period (32μsec)

(b)

T R T R T R

Selection period of loop coil 160-1(448 μ sec) | Selection period of loop coil 160-2(448 μ sec)

DETECTED VOLTAGE

Loop coil 160-1    Loop coil 160-2    Loop coil 160-3    Loop coil 160-4    Loop coil 160-5    Loop coil 160-6

$V_{X2}$

$V_{X3}$

$V_{X4}$

$V_{X1}$

$V_{X5}$

$V_{X8}$

(c)

TIME

FIG. 10

DETECTED VOLTAGE

DETECTION LEVEL

1 2 3 4 5 6 7 8 9    Xρ    43 44 45 46 47 48 | 1 2    TIME

Select all 1ooo coils one by one

$(448 \mu sec \times 48 (\cancel{X}) = 21504 \mu sec)$

FIG. 11

FIG. 12

900 — Electronik computer

501 — Display memory

502 — Controller

505 — Scanning pulse generator

503 — X-direction driver

50 — Display Panel

504 — Y-direction driver

FIG. 13

FIG. 14

Loop coil(n-1)  Loop coil    Loop coil(n+1)

Signal J

·( a )

Loop coil(n-1)  Loop coil        Loop coil(n+1)

T1           T1          T1

Signal J

Input timing    Input timing    Input timing

Loop coil(n-1)  Loop coil    Loop coil(n+1)

Signal J

( c )

FIG. 15

FIG. 16

EP 0 463 163 A1

EP 0 463 163 A1

FIG. 17

28

# INTERNATIONAL SEARCH REPORT

International Application No `PCT/JP90/00332`

**I. CLASSIFICATION OF SUBJECT MATTER** (if several classification symbols apply, indicate all) [6]

According to International Patent Classification (IPC) or to both National Classification and IPC

Int. Cl[5]      G06F3/033, G06K11/20

**II. FIELDS SEARCHED**

| Minimum Documentation Searched [7] | |
|---|---|
| Classification System | Classification Symbols |
| IPC | G06F3/03 - 3/033, G06K11/06 - 11/20 |

Documentation Searched other than Minimum Documentation
to the Extent that such Documents are Included in the Fields Searched [8]

| | |
|---|---|
| Jitsuyo Shinan Koho | 1970 - 1989 |
| Kokai Jitsuyo Shinan Koho | 1971 - 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, U , 61-115240 (Wacom Co., Ltd.), 21 July 1986 (21. 07. 86), (Family: none) | 1 - 16 |
| A | JP, A, 60-175136 (Fujitsu Ltd.), 9 September 1985 (09. 09. 85), (Family: none) | 1 - 16 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| May 14, 1990 (14. 05. 90) | May 28, 1990 (28. 05. 90) |
| International Searching Authority | Signature of Authorized Officer |
| Japanese Patent Office | |

Form PCT/ISA/210 (second sheet) (January 1985)